# EUROPEAN PATENT APPLICATION

(11) **EP 2 654 297 A2**
(43) Date of publication of application: **23.10.2013**
(21) Application number: 13162921.4
(22) Date of filing: 09.04.2013
(51) Int. Cl.: H04N 7/26

(54) **Network abstraction layer extension for HEVC**

(30) Priority: 16.04.2012 US 201261624600 P; 08.03.2013 US 201313790310
(71) Applicant: Sony Corporation, Tokyo 108-0075 (JP)
(72) Inventor: Tabatabai, Ali, Cupertino, California 95014 (US); Haque, Munsi, San Jose, California 95138 (US)
(74) Representative: Turner, James Arthur

(57) **Abstract**

HEVC NAL Unit extension structure enables use of extensions beyond the base NAL Unit structure. Besides using one of the reserved bits, there is no other impact in the "base" NAL Unit structure. In the extension part of this NAL Unit structure, syntax parameters are introduced with register type fixed byte-sizes. This extension process also provides a generic framework for various future combinations of scalability and multi-view coding extensions.

## Description

### FIELD OF THE INVENTION

The present invention relates to the field of video coding.

### BACKGROUND OF THE INVENTION

The Network Abstraction Layer (NAL) is a part of the H.264/AVC video coding standard and the High Efficiency Video Coding (HEVC) standard. The NAL provides a network-friendly video representation addressing video telephony and broadcast/streaming applications.

The coded video data is organized into NAL units, each of which is effectively a packet that contains an integer number of bytes. The first few bytes of each NAL unit are header bytes that contain an indication of the type of data in the NAL unit, and the remaining bytes contain payload data of the type indicated by the header. The NAL unit structure definition specifies a generic format for use in both packet-oriented and bitstream-oriented transport systems, and a series of NAL units generated by an encoder is referred to as a NAL unit stream.

### SUMMARY OF THE INVENTION

Various respective aspects and features of the invention are defined in the appended claims. Combinations of features from the dependent claims may be combined with features of the independent claims as appropriate and not merely as explicitly set out in the claims.

HEVC NAL Unit extension structure enables use of extensions beyond the base NAL Unit structure. Besides using one of the reserved bits, there is no other impact in the "base" NAL Unit structure. In the extension part of this NAL Unit structure, syntax parameters are introduced with register type fixed byte-sizes. This extension process also provides a generic framework for various future combinations of scalability and multi-view coding extensions.

In one aspect, a method of generating a bitstream programmed in a memory of a device comprises acquiring video data, programming a bit related to Network Abstraction Layer and encoding the video data which generates a bitstream including a series of Network Abstraction Layer units. The bit comprises a flag for determining if High Efficiency Video Coding extensions are utilized. If the bit is set, then the High Efficiency Video Coding extensions are utilized, and if the bit is not set, then the base Network Abstraction Layer unit structure is used. The High Efficiency Video Coding extensions include at least one of scalable, multi-view, and 3-dimensional video. The device is selected from the group consisting of a personal computer, a laptop computer, a computer workstation, a server, a mainframe computer, a handheld computer, a personal digital assistant, a cellular/mobile telephone, a smart phone, a smart appliance, a gaming console, a digital camera, a digital camcorder, a camera phone, an portable music player, a tablet computer, a video player, a DVD writer/player, a high definition video writer/player, a television and a home entertainment system.

In one aspect, an encoder comprises an acquisition module configured for acquiring video data, a programming module configured for programming a bit related to Network Abstraction Layer and an encoding module configured for encoding the video data which generates a bitstream including a series of Network Abstraction Layer units. The bit comprises a flag for determining if High Efficiency Video Coding extensions are utilized. If the bit is set, then the High Efficiency Video Coding extensions are utilized, and if the bit is not set, then the base Network Abstraction Layer unit structure is used. The High Efficiency Video Coding extensions include at least one of scalable, multi-view, and 3-dimensional video. The encoder is included in a device selected from the group consisting of a personal computer, a laptop computer, a computer workstation, a server, a mainframe computer, a handheld computer, a personal digital assistant, a cellular/mobile telephone, a smart phone, a smart appliance, a gaming console, a digital camera, a digital camcorder, a camera phone, an portable music player, a tablet computer, a video player, a DVD writer/player, a high definition video writer/player, a television and a home entertainment system.

In another aspect, an apparatus comprises a non-transitory memory for storing an application, the application for: acquiring video data, programming a bit related to Network Abstraction Layer and encoding the video data which generates a bitstream including a series of Network Abstraction Layer units and a processing component coupled to the memory, the processing component configured for processing the application. The bit comprises a flag for determining if High Efficiency Video Coding extensions are utilized. If the bit is set, then the High Efficiency Video Coding extensions are utilized, and if the bit is not set, then the base Network Abstraction Layer unit structure is used. The High Efficiency Video Coding extensions include at least one of scalable, multi-view, and 3-dimensional video. The apparatus is selected from the group consisting of a personal computer, a laptop computer, a computer workstation, a server, a mainframe computer, a handheld computer, a personal digital assistant, a cellular/mobile telephone, a smart phone, a smart appliance, a gaming console, a digital camera, a digital camcorder, a camera phone, an portable music player, a tablet computer, a video player, a DVD writer/player, a high definition video writer/player, a television and a home entertainment system.

In yet another aspect, a network of devices comprises an encoder device comprising an acquisition module configured for acquiring video data, a programming module configured for programming a bit related to Network Abstraction Layer and an encoding module configured for encoding the video data which generates a bitstream including a series of Network Abstraction Layer units and a decoder device configured for: decoding the video data and presenting the decoded video data. The bit comprises a flag for determining if High Efficiency Video Coding extensions are utilized. If the bit is set, then the High Efficiency Video Coding extensions are utilized, and if the bit is not set, then the base Network Abstraction Layer unit structure is used. The High Efficiency Video Coding extensions include at least one of scalable, multi-view, and 3-dimensional video. The encoder device and decoder device are contained on a single device.

Embodiments of the present invention relate to the HEVC NAL Unit syntax structure.

Embodiments of the invention will now be described with reference to the accompanying drawings, throughout which like parts are referred to by like references, and in which:
FIG. 1 illustrates a flowchart of a method of generating a bitstream according to some embodiments;
FIG. 2 illustrates a block diagram of an exemplary computing device configured to implement the HEVC NAL Unit extension method according to some embodiments;
FIG. 3 illustrates a general diagram of an HEVC encoder according to some embodiments; and
FIG. 4 illustrates a general diagram of an HEVC decoder according to some embodiments.

The previous NAL Unit syntax structure does not address next HEVC extensions data structures. Described herein, the previous NAL Unit syntax structure is extended to include future HEVC extensions by using one of the 5 reserved bits as a flag to indicate such extensions. Besides this, there is no other impact in the "base" NAL Unit structure. In the extension part of this NAL Unit structure, syntax parameters are introduced with register type fixed byte-sizes. This extension process also provides a generic framework for various future combinations of scalability and multi-view coding extensions.

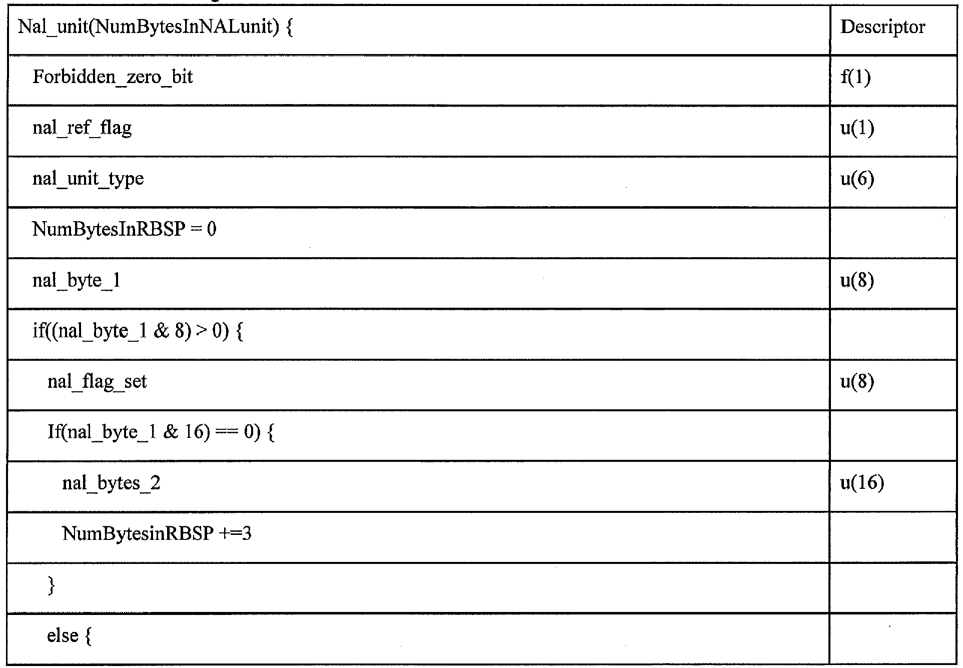

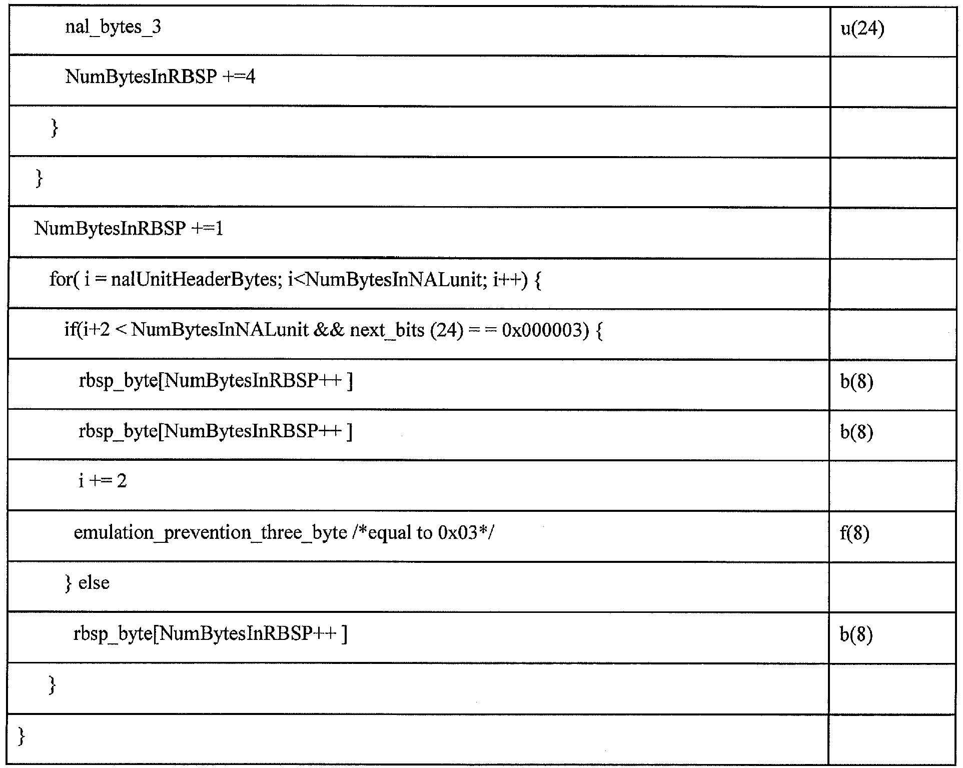

In the above syntax structure, four new syntax elements are introduced which are described herein:

### a) nal_byte_1 Syntax Element: 2 possible configurations - base or extension.

1) The first configuration is for "base" HEVC. It uses 1 bit out of the original "reserved_one_5bits" as an extension flag (ext_flag1) and keeps the remaining 4 bits as reserved for possibly "debugging" related hardware/software issues. Here "ext_flag1" is set to 0.

| | | |
|---|---|---|
| reserved (4-bits) | ext_flag1 (1-bit) | temporal_id (3-bits) |

2) The second configuration is for HEVC Extensions. For the syntax element "nal_byte1", "ext_flag1" is set to 1. In addition, this syntax element contains 3 more fields of "ext_flag2", "nal_id_mask1" and "nal_id mask2" as shown below:

| | | | |
|---|---|---|---|
| nal_id_mask2(3-bits) | ext_flag2(1-bit) | ext_flag2(1-bit) | nal_id_mask1(3-bits) |

i) ext_flag2: For the HEVC Extensions, this 1-bit flag of "ext_flag2" when set to 0, it indicates the allocation of a 2-byte long syntax element "nal_bytes_2", and if set to 1, indicates the allocation of a 3-byte long syntax element "nal_bytes_3" in the next syntax-flow.
nal_id_mask1, nal_id_mask2: These two fields, each being 3-bits long, are used to indicate which types of nal_IDs are present in the next syntax elements for an HEVC extension. The individual bit in these two fields, when set to 1, represents the presence of a specific nal_ID in next syntax elements in the order such bit is present from right to left locations. This is explained in the tables shown below with some examples. In these two fields, although the sizes of such nal_IDs are listed according to the previous extensions specifications of AVC - SVC and MVC, but these are able to be adjusted or redistributed among these IDs themselves.

| nal_id_mask1 | nal_IDs | Example Sizes | HEVC Base & Extensions |
|---|---|---|---|
| 001 | temporal_id | u(3) | All cases |
| 010 | priority_id | u(6) | Scalable & Multi-view |
| 100 | dependency_id | u(3) | Scalable & Multi-view |

| nal_id_mask2 | nal_IDs | Example Sizes | HEVC Base & Extensions |
|---|---|---|---|
| 001 | quality_id | u(4) | Scalable |
| 010 | view_id | u(6) to u(10) | Multi-view |
| 100 | reserved | | |

The "reserved" location in "nal_id_mask2" is able to be used for inserting any other nal_ID for other HEVC extensions. The example definitions of the two fields of (nal_id_mask2, nal_d_mask1) are able to be modified according to any future HEVC extension. As mentioned earlier, the sizes of such nal_IDs are able to be re-adjusted according to a specific HEVC extension type, as needed.
Some default examples for the two fields (nal_id_mask2, nal_id_mask1) are provided below for HEVC extensions according to the previous AVC extensions of SVC and MVC:

Scalable => (001, 111), Multi-view => (010, 011), Multi-view Scalable => (010, 111) and so on. These two fields are used to differentiate various HEVC extensions according to the nal_ID choices.
For some HEVC extensions, such as the example "Multi-view" or "Multi-view Scalable" cases, the next syntax elements (nal_bytes_2, or nal_bytes_3) containing the corresponding nal_IDs may remain "incomplete" structure-wise, e.g., some "msb" bit-locations in such syntax elements may remain empty to be filled up with "reserved" bits. Such filling up will be automatic if no more nal_IDs are present in "nat_iD_mask2".
3) The third configuration uses 2 bits (ext_flag1 and ext_flag2) out of the syntax element "nat_byte1", and can be combined to be called "adaptation_field". Here is the bit-allocation for this "adaptation_field" syntax:

| adaptation_field | Extra header bytes | NAL Unit Header extensions |
|---|---|---|
| 00 | 0 | Default |
| 01 | 1 | nal_flags_set only |
| 10 | 1+2=3 | nal_flags_set and nal_bytes_2 |
| 11 | 1+3=4 | nal_flags_set and nal_bytes_2 |

Adaptation field
01 = no adaptation fields, payload only
Adaptation field exist 10 = adaptation field only
11 = adaptation field and payload

### b) nal_flags_set Syntax Element (1 byte)

This 1-byte long syntax element consolidates all possible 1-bit flags that may be needed for HEVC extensions. The table below shows an example for the HEVC extensions about how this syntax element structure can be created by using the flag bits as present in AVC extensions of SVC and MVC.

| nal_flags_set (example) | value |
|---|---|
| idr_flag | 0000 0001 |
| no_inter_layer_pred_flag | 0000 0010 |
| use_ref_base_pic_flag | 0000 0100 |
| discardable_flag | 0000 1000 |
| output_flag | 0001 0000 |
| anchor_pic_flag | 0010 0000 |
| inter_view_flag | 0100 0000 |
| reserved | 1000 0000 |

### c) nal_byte_2 Syntax Element

This 2-bytes long syntax element contains a group of nal_IDs as indicated by the (nal_id_mask2, nal_id_mask1) fields-pair, as explained in "nal_byte_1" syntax element definition earlier.

Below is shown one example of bit allocations in "nal_bytes_2" for an HEVC Extension of "Scalable Video". Here the (nal_id_mask2, nal_id_mask1) fields-pair is able to be pre-defined or fixed as (001, 111) for this HEVC extension.

| | | | |
|---|---|---|---|
| quality_id (4-bits) | dependency_id (3-bits) | priority_id (6-bits) | temporat_id (3-bits) |

### d) nal_bytes_3 Syntax Element

This 3-bytes long syntax element contains a group of nal_IDs as indicated by the (nal_id_mask2, nal_id_mask1) fields-pair, as explained in "nal_byte_1" syntax element definition before.

Below are shown three examples of bit allocations in "nal_bytes_3" for three HEVC Extension cases of "Multi-view video", "Multi-view & Scalable Video" and "3DV extension". Here the (nal_id_mask2, nal_id_mask1) fields-pair is able to be pre-defined or fixed as shown below.

### i) Example-1 (Multi-view Video) : (nal_id_mask2, nal_id_mask1) = (010, 011)

| | | | |
|---|---|---|---|
| reserved (5-bits) | view_id (10-bits) | priority_id (6-bits) | temporat_id (3-bits) |

### ii) Example-2 (Multi-view & Scalable Video) : (nal_id_mask2, nal_id_mask1) = (010, 111)

| | | | | |
|---|---|---|---|---|
| reserved (2-bits) | view_id (10-bits) | dependency_id (3-bits) | priority_id (6-bits) | temporal_id (3-bits) |

### iii) Example-3 (3DV (3-D Video) Extension) with different bit-assignment for nal_IDs

### a. Keep nal_id_mask1 the same as before, but change nal_id_mask2 as follows:

| nal_id_mask2 | nal_IDs | Example Sizes | HEVC Base & Extensions |
|---|---|---|---|
| 001 | view_id | u(7) | Multi-view |
| 010 | texture_id | u(4) | 3DV Extension |
| 100 | depth_id | u(4) | 3DV Extension |

### b. (nal_id_mask2, nal_id_mask1) = (111, 011)

| | | | | |
|---|---|---|---|---|
| depth_id(4-bits) | texture_id (4-bits) | view_id (7-bits) | priority_id (6-bits) | temporal_id (3-bits) |

The HEVC NAL Unit Structure is extended to handle future coded video contents using HEVC Extension algorithms of scalability and multi-view coding schemes.

In the syntax modification, only one bit from the unused reserved_one_5bits is utilized without affecting the "base" HEVC NAL unit structure. The extension parts of this new NAL Unit structure are also capable of handling Scalable or Multi-view coding and also various combinations of them, as it has a sufficiently general-purpose structure.

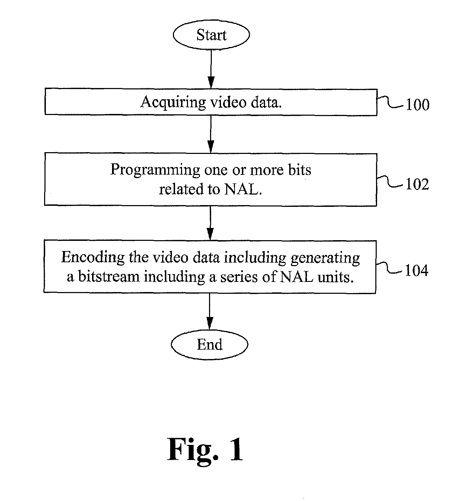

Figure 1 illustrates a flowchart of a method of generating a bitstream according to some embodiments. In the step 100, video data is acquired. In the step 102, bits related to NAL are programmed. The bits related to NAL include a bit for determining whether extensions are to be indicated. In the step 104, the video data is encoded generating a bitstream including a series of NAL units. In some embodiments, more or fewer steps are implemented. In some embodiments, the order of the steps is modified.

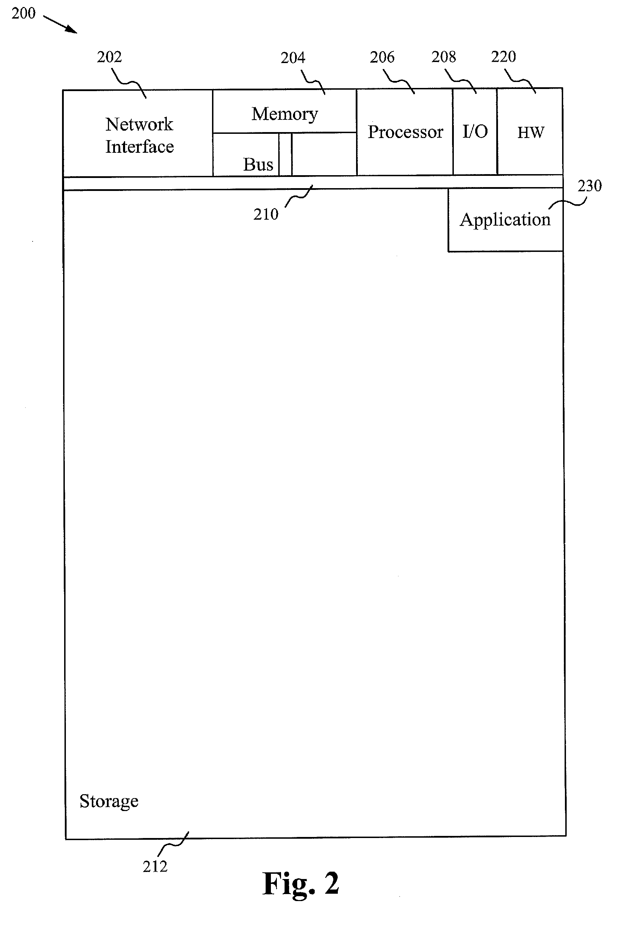

Figure 2 illustrates a block diagram of an exemplary computing device configured to implement the HEVC NAL Unit extension method according to some embodiments. The computing device 200 is able to be used to acquire, store, compute, process, communicate and/or display information such as images and videos. In general, a hardware structure suitable for implementing the computing device 200 includes a network interface 202, a memory 204, a processor 206, I/O device(s) 208, a bus 210 and a storage device 212. The choice of processor is not critical as long as a suitable processor with sufficient speed is chosen. The memory 204 is able to be any conventional computer memory known in the art. The storage device 212 is able to include a hard drive, CDROM, CDRW, DVD, DVDRW, Blu-ray®, flash memory card or any other storage device. The computing device 200 is able to include one or more network interfaces 202. An example of a network interface includes a network card connected to an Ethernet or other type of LAN. The I/O device(s) 208 are able to include one or more of the following: keyboard, mouse, monitor, screen, printer, modem, touchscreen, button interface and other devices. HEVC NAL Unit extension application(s) 230 used to perform the HEVC NAL Unit extension method are likely to be stored in the storage device 212 and memory 204 and processed as applications are typically processed. More or less components shown in Figure 2 are able to be included in the computing device 200. In some embodiments, HEVC NAL Unit extension hardware 220 is included. Although the computing device 200 in Figure 2 includes applications 230 and hardware 220 for the HEVC NAL Unit extension method, the HEVC NAL Unit extension method is able to be implemented on a computing device in hardware, firmware, software or any combination thereof. For example, in some embodiments, the HEVC NAL Unit extension applications 230 are programmed in a memory and executed using a processor. In another example, in some embodiments, the HEVC NAL Unit extension hardware 220 is programmed hardware logic including gates specifically designed to implement the HEVC NAL Unit extension method.

In some embodiments, the HEVC NAL Unit extension application(s) 230 include several applications and/or modules. In some embodiments, modules include one or more sub-modules as well. In some embodiments, fewer or additional modules are able to be included.

Examples of suitable computing devices include a personal computer, a laptop computer, a computer workstation, a server, a mainframe computer, a handheld computer, a personal digital assistant, a cellular/mobile telephone, a smart appliance, a gaming console, a digital camera, a digital camcorder, a camera phone, a smart phone, a portable music player, a tablet computer, a mobile device, a video player, a video disc writer/player (e.g., DVD writer/player, Blu-ray® writer/player), a television, a home entertainment system or any other suitable computing device.

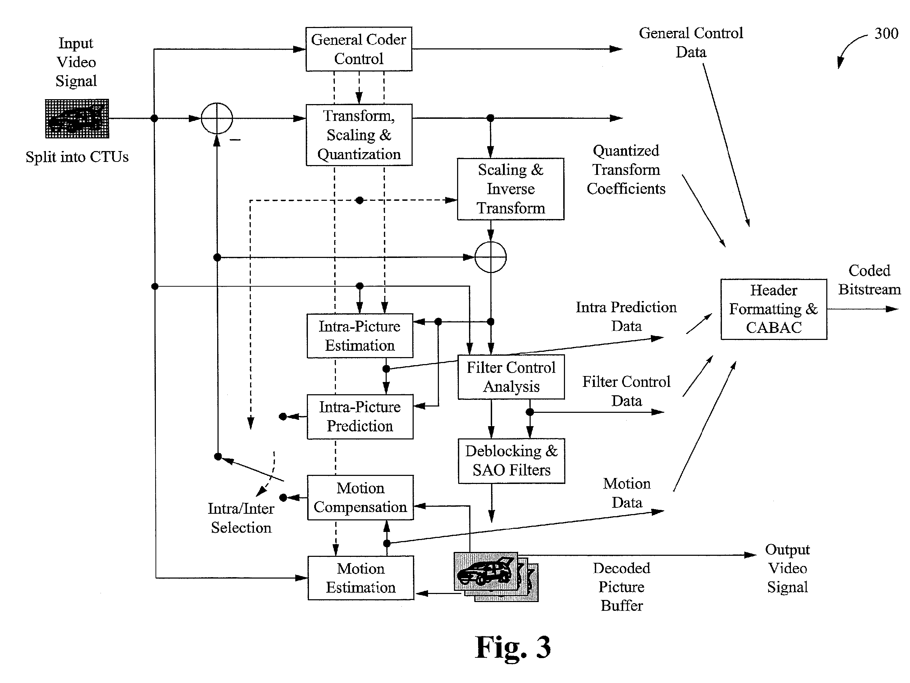

Figure 3 illustrates a general diagram of an HEVC encoder according to some embodiments. The encoder 300 includes a general coder control component, a transform scaling and quantization component, a scaling and inverse transform component, an intra-picture estimation component, a filter control analysis component, an intra-picture prediction component, a deblocking and SAO filters component, a motion compensation component, a motion estimation component, and a header formatting and CABAC component. An input video signal is received by the encoder 300 and is split into Coding Tree Units (CTUs). The HEVC encoder components process the video data and generate a coded bitstream.

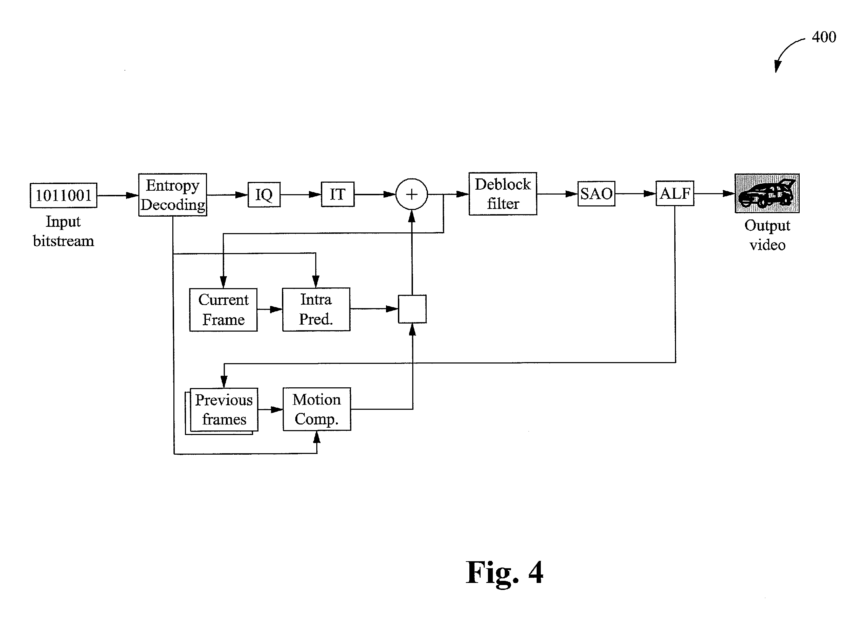

Figure 4 illustrates a general diagram of an HEVC decoder according to some embodiments. The decoder 400 includes an entropy decoding component, an inverse quantization component, an inverse transform component, a current frame component, an intra prediction component, a previous frames component, a motion compensation component, a deblocking filter, an SAO component and an adaptive loop filter. An input bitstream (e.g., a coded video) is received by the decoder 400, and a decoded bitstream is generated for display.

To utilize the HEVC NAL Unit extension method, a device such as a digital camera is able to be used to acquire a video. The HEVC NAL Unit extension method is automatically used when performing video processing. The HEVC NAL Unit extension method is able to be implemented automatically without user involvement.

In operation, the HEVC NAL Unit extension method enables use of an extended NAL Unit syntax structure. Besides using one of the reserved bits, there is no other impact in the "base" NAL Unit structure. In the extension part of this NAL Unit structure, syntax parameters are introduced with register type fixed byte-sizes. This extension process also provides a generic framework for various future combinations of scalability and multi-view coding extensions.

### SOME EMBODIMENTS OF EXTENSION OF HEVC NAL UNIT SYNTAX STRUCTURE

1. A method of generating a bitstream programmed in a memory of a device comprising:
   a. acquiring video data;
   b. programming a bit related to Network Abstraction Layer; and
   c. encoding the video data which generates a bitstream including a series of Network Abstraction Layer units.
2. The method of clause 1 wherein the bit comprises a flag for determining if High Efficiency Video Coding extensions are utilized.
3. The method of clause 2 wherein if the bit is set, then the High Efficiency Video Coding extensions are utilized, and if the bit is not set, then the base Network Abstraction Layer unit structure is used.
4. The method of clause 1 wherein the High Efficiency Video Coding extensions include at least one of scalable, multi-view, and 3-dimensional video.
5. The method of clause 1 wherein the device is selected from the group consisting of a personal computer, a laptop computer, a computer workstation, a server, a mainframe computer, a handheld computer, a personal digital assistant, a cellular/mobile telephone, a smart phone, a smart appliance, a gaming console, a digital camera, a digital camcorder, a camera phone, an portable music player, a tablet computer, a video player, a DVD writer/player, a high definition video writer/player, a television and a home entertainment system.
6. An encoder comprising:
   a. an acquisition module configured for acquiring video data;
   b. a programming module configured for programming a bit related to Network Abstraction Layer; and
   c. an encoding module configured for encoding the video data which generates a bitstream including a series of Network Abstraction Layer units.
7. The encoder of clause 6 wherein the bit comprises a flag for determining if High Efficiency Video Coding extensions are utilized.
8. The encoder of clause 7 wherein if the bit is set, then the High Efficiency Video Coding extensions are utilized, and if the bit is not set, then the base Network Abstraction Layer unit structure is used.
9. The encoder of clause 6 wherein the High Efficiency Video Coding extensions include at least one of scalable, multi-view, and 3-dimensional video.
10. The encoder of clause 6 wherein the encoder is included in a device selected from the group consisting of a personal computer, a laptop computer, a computer workstation, a server, a mainframe computer, a handheld computer, a personal digital assistant, a cellular/mobile telephone, a smart phone, a smart appliance, a gaming console, a digital camera, a digital camcorder, a camera phone, an portable music player, a tablet computer, a video player, a DVD writer/player, a high definition video writer/player, a television and a home entertainment system.
11. An apparatus comprising:
   a. a non-transitory memory for storing an application, the application for:
      i. acquiring video data;
      ii. programming a bit related to Network Abstraction Layer; and
      iii. encoding the video data which generates a bitstream including a series of Network Abstraction Layer units; and
   b. a processing component coupled to the memory, the processing component configured for processing the application.
12. The apparatus of clause 11 wherein the bit comprises a flag for determining if High Efficiency Video Coding extensions are utilized.
13. The apparatus of clause 12 wherein if the bit is set, then the High Efficiency Video Coding extensions are utilized, and if the bit is not set, then the base Network Abstraction Layer unit structure is used.
14. The apparatus of clause 11 wherein the High Efficiency Video Coding extensions include at least one of scalable, multi-view, and 3-dimensional video.
15. The apparatus of clause 11 wherein the apparatus is selected from the group consisting of a personal computer, a laptop computer, a computer workstation, a server, a mainframe computer, a handheld computer, a personal digital assistant, a cellular/mobile telephone, a smart phone, a smart appliance, a gaming console, a digital camera, a digital camcorder, a camera phone, an portable music player, a tablet computer, a video player, a DVD writer/player, a high definition video writer/player, a television and a home entertainment system.
16. A network of devices comprising:
   a. an encoder device comprising:
      i. an acquisition module configured for acquiring video data;
      ii. a programming module configured for programming a bit related to Network Abstraction Layer; and
      iii. an encoding module configured for encoding the video data which generates a bitstream including a series of Network Abstraction Layer units; and
   b. a decoder device configured for:
      i. decoding the video data; and
      ii. presenting the decoded video data.
17. The network of devices of clause 16 wherein the bit comprises a flag for determining if High Efficiency Video Coding extensions are utilized.
18. The network of devices of clause 17 wherein if the bit is set, then the High Efficiency Video Coding extensions are utilized, and if the bit is not set, then the base Network Abstraction Layer unit structure is used.
19. The network of devices of clause 16 wherein the High Efficiency Video Coding extensions include at least one of scalable, multi-view, and 3-dimensional video.
20. The network of devices of clause 16 wherein the encoder device and decoder device are contained on a single device.

The present invention has been described in terms of specific embodiments incorporating details to facilitate the understanding of principles of construction and operation of the invention. Such reference herein to specific embodiments and details thereof is not intended to limit the scope of the claims appended hereto. It will be readily apparent to one skilled in the art that other various modifications may be made in the embodiment chosen for illustration without departing from the scope of the invention as defined by the claims.

## Claims

1. A method of generating a bitstream programmed in a memory of a device comprising:
a. acquiring video data;
b. programming a bit related to Network Abstraction Layer; and
c. encoding the video data which generates a bitstream including a series of Network Abstraction Layer units.

2. The method of claim 1 wherein the bit comprises a flag for determining if High Efficiency Video Coding extensions are utilized.

3. The method of claim 2 wherein if the bit is set, then the High Efficiency Video Coding extensions are utilized, and if the bit is not set, then the base Network Abstraction Layer unit structure is used.

4. The method of claim 1 wherein the High Efficiency Video Coding extensions include at least one of scalable, multi-view, and 3-dimensional video.

5. The method of claim 1 wherein the device is selected from the group consisting of a personal computer, a laptop computer, a computer workstation, a server, a mainframe computer, a handheld computer, a personal digital assistant, a cellular/mobile telephone, a smart phone, a smart appliance, a gaming console, a digital camera, a digital camcorder, a camera phone, an portable music player, a tablet computer, a video player, a DVD writer/player, a high definition video writer/player, a television and a home entertainment system.

6. An encoder comprising:
a. an acquisition module configured for acquiring video data;
b. a programming module configured for programming a bit related to Network Abstraction Layer; and
c. an encoding module configured for encoding the video data which generates a bitstream including a series of Network Abstraction Layer units.

7. The encoder of claim 6 wherein the bit comprises a flag for determining if High Efficiency Video Coding extensions are utilized.

8. The encoder of claim 7 wherein if the bit is set, then the High Efficiency Video Coding extensions are utilized, and if the bit is not set, then the base Network Abstraction Layer unit structure is used.

9. The encoder of claim 6 wherein the High Efficiency Video Coding extensions include at least one of scalable, multi-view, and 3-dimensional video.

10. The encoder of claim 6 wherein the encoder is included in a device selected from the group consisting of a personal computer, a laptop computer, a computer workstation, a server, a mainframe computer, a handheld computer, a personal digital assistant, a cellular/mobile telephone, a smart phone, a smart appliance, a gaming console, a digital camera, a digital camcorder, a camera phone, an portable music player, a tablet computer, a video player, a DVD writer/player, a high definition video writer/player, a television and a home entertainment system.

11. An apparatus comprising:
a. a non-transitory memory for storing an application, the application for:
i. acquiring video data;
ii. programming a bit related to Network Abstraction Layer; and
iii. encoding the video data which generates a bitstream including a series of Network Abstraction Layer units; and
b. a processing component coupled to the memory, the processing component configured for processing the application.

12. The apparatus of claim 11 wherein the bit comprises a flag for determining if High Efficiency Video Coding extensions are utilized.

13. The apparatus of claim 11 wherein the apparatus is selected from the group consisting of a personal computer, a laptop computer, a computer workstation, a server, a mainframe computer, a handheld computer, a personal digital assistant, a cellular/mobile telephone, a smart phone, a smart appliance, a gaming console, a digital camera, a digital camcorder, a camera phone, an portable music player, a tablet computer, a video player, a DVD writer/player, a high definition video writer/player, a television and a home entertainment system.

14. A network of devices comprising:
a. an encoder device comprising:
i. an acquisition module configured for acquiring video data;
ii. a programming module configured for programming a bit related to Network Abstraction Layer; and
iii. an encoding module configured for encoding the video data which generates a bitstream including a series of Network Abstraction Layer units; and
b. a decoder device configured for:
i. decoding the video data; and
ii. presenting the decoded video data.

15. The network of devices of claim 14 wherein the encoder device and decoder device are contained on a single device.
